# EUROPÄISCHE PATENTSCHRIFT

(11) **EP 2 205 390 B1**
(45) Veröffentlichungstag und Bekanntmachung des Hinweises auf die Patenterteilung: **05.06.2013**
(21) Anmeldenummer: 08848449.8
(22) Anmeldetag: 14.10.2008
(51) Int. Cl.: B23D 77/00, B23D 77/04

(54) **ROTIERENDES SCHAFTWERKZEUG, INSBESONDERE STUFENREIBAHLE**
ROTATING SHAFT TOOL, IN PARTICULAR MULTI-STAGE REAMER
OUTIL A TIGE ROTATIF, NOTAMMENT ALESOIR ETAGE

(30) Priorität: 07.11.2007 DE 202007015595 U
(43) Veröffentlichungstag der Anmeldung: 14.07.2010
(73) Patentinhaber: Gühring OHG, 72458 Albstadt (DE)
(72) Erfinder: SCHÄFER, Roland, 70563 Stuttgart (DE)
(74) Vertreter: Meitinger, Thomas Heinz
(86) Internationale Anmeldenummer: PCT/DE2008/001648
(87) Internationale Veröffentlichungsnummer: WO 2009/059576

(56) Entgegenhaltungen:
- WO-A-03/101650
- WO-A-2007/003248
- DE-A1- 19 719 892
- DE-A1-102005 028 368
- DE-U1-202006 004 719
- US-A- 5 326 196

## Beschreibung

Die Erfindung betrifft ein rotierendes Schaftwerkzeug wie es aus der DE 20 2006 004 719 U1 bekannt ist.

### Stand der Technik

Aus dem deutschen Gebrauchsmuster DE 20 2006 004 719 U1 ist eine Stufenreibahle bekannt, die ein erstes Schaftteil umfasst, an dem ein erster Schneidkopf mit Schneiden ausgebildet ist, wobei in einer Ausnehmung im ersten Schaftteil ein zweites Schaftteil mit kleinerem Durchmesser sitzt, an welchem ein zweiter Schneidkopf ausgebildet ist. Zwischen dem ersten und dem zweiten Schaftteil ist ein konischer Sitz ausgeformt. Des Weiteren sind Einstellmittel vorgesehen, mit welchen die Verspannkraft des konischen Sitzes veränderbar ist, womit der Fügezustand des konischen Sitzes eingestellt werden kann. Dadurch lässt sich der Durchmesser des Schneidkopfes vom ersten Schaftteil einstellen.

Als Einstellmittel läuft ein Zuganker vom Schaftteil.

### Aufgabe und Vorteile der Erfindung

Der Erfindung liegt die Aufgabe zu Grunde, ein Schaftwerkzeug mit einstellbarem Schneiddurchmesser bereitzustellen, das eine verbesserte Handhabung ermöglicht.

Diese Aufgabe wird durch die Merkmale des Anspruchs 1 gelöst.

In den abhängigen Ansprüchen sind vorteilhafte und zweckmäßige Weiterbildungen der Erfindung beschrieben.

Wie beansprucht, wird ein rotierbares Schaftwerkzeug, insbesondere Stufenreibahle, vorgeschlagen, welches ein erstes Schaftteil, an dem ein erster Schneidkopf mit wenigstens einer Schneide und mit einstellbarem Durchmesser ausgebildet ist, und ein zweites Schaftteil, an dem ein zweiter Schneidkopf mit wenigstens einer Schneide vorgesehen ist. Das zweite Schaftteil kann in einer Ausnehmung im ersten Schaftteil in der Achse des ersten Schaftteils eingesetzt werden. Das erste Schaftteil weist einen zentralen Durchgang auf, bei dem im Bereich des ersten Schneidkopfs ein Konussitz mit einem Innenkonus und ein zylindrischer Abschnitt mit einem Innengewinde ausgebildet sind. Am zweiten Schaftteil ist ein dem Innenkonus entsprechender Außenkonus und ein zylindrischer Abschnitt mit einem Außengewinde ausgebildet.

Erfindungsgemäß ist das zweite Schaftteil verdrehbar in das erste Schaffteil einsetzbar. Dabei greifen im eingesetzten Zustand des zweiten Schaftteils der Außenkonus bzw. das Außengewinde des zweiten Schaftteils mit dem Innenkonus bzw. dem Innengewinde des ersten Schaftteils ineinander. Durch Anziehen der Verschraubung aus Innengewinde und Außengewinde wird der Außenkonus in den Innenkonus gezogen. Somit ist durch Verdrehung der Schaftteile zueinander ein fester Sitz des zweiten Schafteils in dem ersten Schaftteil ausbildbar.

Vorzugsweise ist der Konussitz so ausgebildet, dass je nach Verspannzustand des Konussitzes durch ein Verdrehen des zweiten Schaftteils gegenüber dem ersten Schaftteil eine Einstellbarkeit eines Schneiddurchmessers des ersten Schneidkopfs in einem vorgegebenen Einstellbereich gegeben ist.

Durch diese Maßnahme wird es möglich, eine Verbindung der beiden Schaftteile und insbesondere damit den Durchmesser des ersten Schneidkopfs zu verändern, obgleich das Schaftwerkzeug z.B. in einer Spindel einer Werkzeugmaschine eingesetzt ist. Denn eine Verdrehung des zweiten Schaftteil erfordert nicht zwingend Betätigungsbereiche, die in einem in eine Spindel eingesetzten Zustand des Schaftwerkzeugs nicht zugänglich wären.

Zwischen dem ersten und dem zweiten Schaftteil ist ein konischer Sitz ausgeformt. Je nach Anpresskraft des konischen Sitzes lassen sich geometrische Verhältnisse einstellen. Sind im Sitzbereich z.B. die Schneiden des ersten Schaftteils positioniert, kann auf diese Weise der Durchmesser des ersten Schneidkopfs verändert werden.

Das zweite Schaftteil ist in das erste Schaftteil einschraubbar. Damit kann z.B. je nach Einschraubkraft über den konischen Sitz eine Durchmesserveränderung des ersten Schneidkopfes erreicht werden.

Zur Verdrehung der Schaftteile zueinander ist es im Weiteren bevorzugt, wenn am zweiten Schaftteil Eingreifmittel für ein Betätigungswerkzeug vorgesehen sind. Zum Beispiel sind planparallele Flächen für den Einsatz eines Gabelschlüssels ausgebildet.

Im Weiteren ist es bevorzugt, wenn auch am ersten Schaftteil Eingreifmittel vorhanden sind, z.B. auch in Form von planparallelen Flächen für einen Gabelschlüssel. Damit lässt sich eine Verdrehkraft am zweiten Schaftteil über den Ansatz eines Betätigungswerkzeugs am ersten Schaftteil gegenhalten und umgekehrt.

Somit lässt sich nach außen kraftneutral eine Verdrehung der Schaftteile zueinander vornehmen. Entsprechende Eingreifmittel für ein Betätigungswerkzeug sind vorzugsweise auch bei einem in einer Spindel montiertem Zustand des Schaftwerkzeugs zugänglich, so dass im Montagezustand eine Verdrehung der Schaftteile zueinander mit der Möglichkeit der Einstellung des Durchmessers des ersten Schneidkopfs vorhanden ist.

Vorzugsweise ist im zweiten Schaftteil ein Kühlkanal vorhanden, der einen Auslass im Bereich des zweiten Schneidkopfs besitzt. Vorzugsweise ist im ersten Schaftteil ebenfalls ein Kühlkanal ausgebildet, der mit dem Kühlkanal im zweiten Schaftteil in Verbindung steht. Damit kann der zweite Schneidkopf zentral mit Kühl-/Schmiermittel versorgt werden.

In einer bevorzugten Ausgestaltung weist der Kühlkanal im zweiten Schaftteil einen entlang des Schaftes verlaufenden Kühlkanalabschnitt und einen von der Achse des zweiten Schaftteils nach außen laufenden Kühlkanalabschnitt auf, der im Bereich einer Schneide des zweiten Schneidkopfs einen Auslass besitzt. In einem Fall, in welchem mehrere Schneiden am Schneidkopf angeordnet sind, ist vorzugsweise ein nach außen verlaufender Kühlkanalabschnitt in den Bereich einer jeden Schneide geführt. Damit lässt sich eine bestmögliche Schmierung/Kühlung der Schneiden im Arbeitseinsatz erreichen. Zum Beispiel sind nach außen verlaufende Kühlkanalabschnitte als schräg zur Achse angeordnete Kühlkanalabschnitte ausgebildet, die einen Auslass im Bereich einer Schneide besitzen.

In einer bevorzugten Ausgestaltung ist im zweiten Schaftteil in der Stirnseite des Schneidkopfes ein Schraubenelement vorgesehen, in welchem ein Kühlkanalabschnitt ausgebildet ist, der mit einem Kühlkanalabschnitt in Verbindung steht, welcher insbesondere zentral im zweiten Schaftteil läuft. Durch den Einsatz eines Schraubenelements lässt sich die Führung des Kühlkanals im zweiten Schaftteil im Hinblick auf eine Herstellbarkeit vereinfachen.

Das Schraubenelement schließt beispielsweise einen zentral im zweiten Schaftteil angeordneten Kühlkanalabschnitt an der Stirnseite ab, schafft jedoch bevorzugt gleichzeitig eine Verbindung des abgeschlossenen Kühlkanalabschnitts mit einem oder mehreren von der Achse nach außen laufenden Kühlkanalabschnitten, die insbesondere im Bereich der Schneiden des zweiten Schneidkopfs jeweils einen Auslass besitzen. Hierzu weist der Kühlkanalabschnitt im Schraubenelement z.B. Verbindungsabschnitte auf, die einen Auslass in einer Freimachung in einem Wandungsabschnitt des zweiten Schaftteils besitzen, von dem die von der Achse nach außen laufenden Kühlkanalabschnitte im zweiten Schaftteil ausgehen. Diese Betrachtung setzt den Montagezustand des Schraubenelements im zweiten Schaftteil voraus.

Die Freimachung, z.B. ein Einstich in der Wandung des zweiten Schaftteils, ist vorzugsweise derart bemessen, dass in sinnvollen Montagelagen des Schraubenelements, das z.B. für die Einstellung unterschiedlicher Durchmesser des zweiten Schneidkopfs über einen Konussitz verschiedene Lagen einnehmen kann, eine Verbindung einer z.B. zentral im zweiten Schaftteil verlaufenden Kühlkanalabschnitts zu den nach außen laufenden Kühlkanalabschnitten immer gewährleistet ist.

### Zeichnungen

Ein Ausführungsbeispiel der Erfindung ist anhand von mehreren Zeichnungen nachstehend unter Angabe weiterer Vorteile und Einzelheiten näher erläutert.

Es zeigen:
- Figur 1: eine erfindungsgemäße Mehrstufenreibahle in einer Seitenansicht,
- Figur 2: die Stufenreibahle aus Figur 1 in einer Draufsicht,
- Figur 3: die Stufenreibahle aus Figur 1 in einer geschnittenen Seitenansicht entlang der Achse des Werkzeugs und
- Figur 4: eine vergrößerte Darstellung des vorderen Abschnitts der Mehrstufenreibahle gemäß der Schnittansicht nach Figur 3.

In den Figuren ist eine Stufenreibahle 1 dargestellt, die ein erstes Schaftteil 2 sowie ein zweites Schaftteil 3 umfasst. Am ersten Schaftteil 2 ist ein Hohlschaftkegel 4 für die Anbringung an eine Werkzeugmaschine ausgebildet.

Am ersten Schaftteil 2 ist ein Schneidkopf 5 vorhanden, der z.B. PKD-Schneidplatten 6 (polykristalliner Diamant) besitzt, die in entsprechenden Ausnehmungen 7 angeordnet sind. Den PKD-Schneidplatten 6 sind Spannuten 8 zugeordnet. Insgesamt sind über den Umfang des Scheidkopfes 5 sechs Schneidplatten 6 verteilt.

Das erste Schaftteil 2 weist einen zentralen Durchgang 9 auf, der im Bereich des Schneidkopfes 5 einen Konussitz 10 mit einem Innenkonus 13 und einem entsprechenden Außenkonus 11 am zweiten Schaftteil 3 ausbildet.

Durch einen Einstich 12 geht der Innenkonus 13 am ersten Schaftteil 2 des Konussitzes 10 in zwei zylindrische Abschnitte 14 und 15 über, wobei am zylindrischen Abschnitt 15 ein Innengewinde 16 ausgebildet ist. In das Innengewinde 16 ist ein zylindrischer Abschnitt 17 mit Außengewinde 18 des zweiten Schaftteils 3 eingeschraubt. Durch Anziehen der Verschraubung aus Innengewinde 16 und Außengewinde 18 wird der Außenkonus 11 in den Innenkonus 13 gezogen, so dass ein fester Sitz des zweiten Schaftteils 3 im ersten Schaftteil 2 ausgebildet wird.

Je nach Verspannzustand des Konussitzes 10 durch ein Verdrehen des zweiten Schaftteils 3 gegenüber dem ersten Schaftteil 2 ist eine Einstellbarkeit eines Schneiddurchmessers, auf welchem die Schneidplatten 6 laufen, in einem gewissen Einstellbereich gegeben.

Um das zweite Schaftteil 3 gegenüber dem ersten Schaftteil 2 verdrehen zu können, ist sowohl am ersten Schaftteil 2 als auch am zweiten Schaftteil 3 ein Zweikant 19 bzw. 20 vorhanden, in welchem sich Gabelschlüssel ansetzen lassen. Der erste Zweikant 19 hat z.B. eine Schlüsselweite von 21. Der zweite Zweikant 20 am zweiten Schaftteil 3 weist beispielsweise eine Schlüsselweite von 13 auf. Damit ist es möglich, nach außen kraftneutral durch entsprechendes Gegenhalten mit Gabelschlüsseln die Spannung der Verschraubung des ersten Schaftteils mit dem zweiten Schaftteil einzustellen. Dies kann auch dann erfolgen, wenn die Stufenreibahle 1 mit ihrem Hohlschaftkegel 4 bereits in einer Spindel sitzt, ggf. während einer Unterbrechung einer laufenden Bearbeitung, um den Durchmesser des Schneidkopfs 5 nachzujustieren.

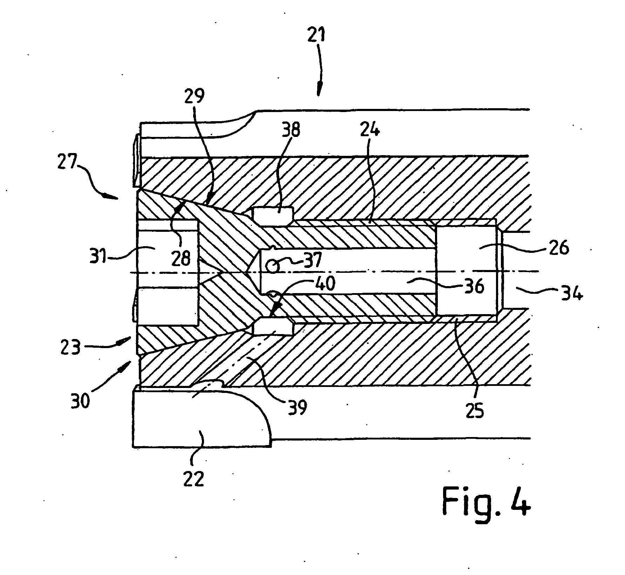

Im Ausführungsbeispiel ist auch der Durchmesser eines Schneidkopfs 21 mit Schneidplatten 22 (siehe insbesondere Figur 4) am zweiten Schaffteil 3 justierbar. Hierzu ist eine Einstellschraube 23 mit einem Außengewinde 24 in ein dazu passendes Innengewinde 25 einer Bohrung 26 von einer Stirnseite 27 des Schneidkopfs 21 eingeschraubt.

Die Einstellschraube 23 besitzt einen Außenkonus 28, der mit einem dazu passenden Innenkonus 29 am zweiten Schaftteil 3 einen Konussitz 30 bildet. Durch den Verspannzustand des Konussitzes 30 kann der Innenkonus 29 stärker oder weniger stark aufgeweitet werden, wodurch sich ein Bearbeitungsdurchmesser, auf welchem die Schneidplatten 22 laufen, ebenfalls justieren lässt. Sowohl der Konussitz 10 als auch der Konussitz 30 sind vorzugsweise so aufeinander abgestimmt, dass zunächst die am jeweiligen Schneidkopf 5, 21 stirnseitig positionierten Abschnitte des jeweiligen Innenkonus 13, 29 zuerst zur Anlage kommen, so dass dort definiert eine Durchmesseraufweitung durch Eindrehen des jeweiligen Außenkonus 11, 28 erreichbar ist.

Die Einstellschraube 23 kann z.B. über einen Innensitzkant 31 eingeschraubt werden.

Ein weiterer wesentlicher Aspekt der Stufenreibahle 1 liegt in der Kühl-/Schmiermittelführung.

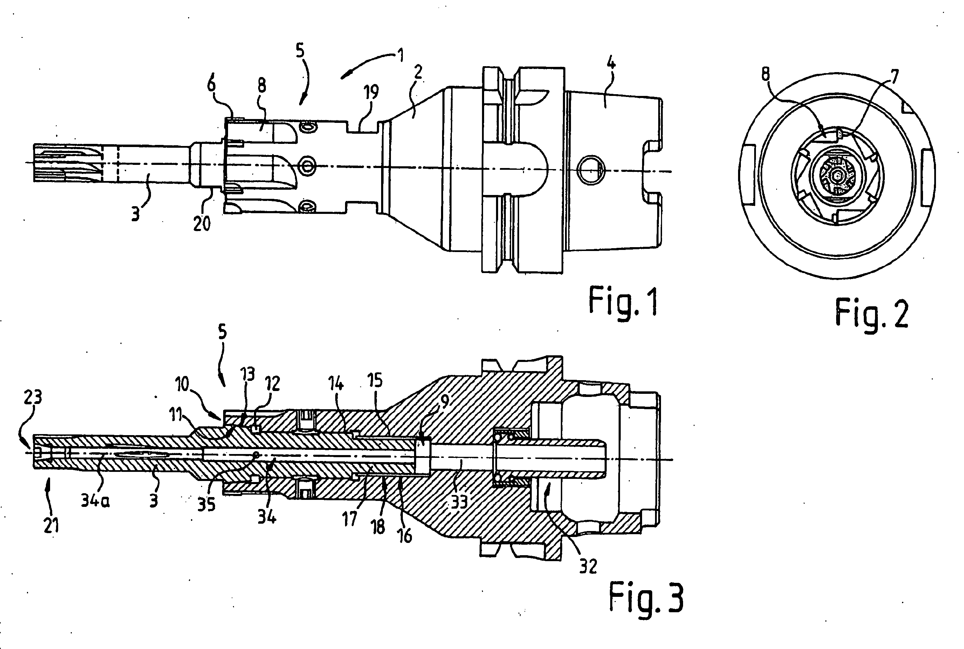

Über einen Übergabesatz 32, der aus dem Stand der Technik bekannt ist, gelangt z.B. von einer Spindel in eingesetztem Zustand Kühl-/Schmiermittel in einen ersten Abschnitt 33 des Durchgangs 9. Im zylindrischen Abschnitt 15 erfolgt eine Übergabe in einen Kühlkanal 34 des zweiten Schaftteils 3. Auf der Höhe des Einstichs 12 im ersten Schaftteil 2 kann, wie in Figur 3 ersichtlich, eine Querverbindung 35 zum Einstich 12 vorgesehen sein, von welchem nicht dargestellte Verbindungen zu Auslässen im Bereich der jeweiligen Schneidplatten 6 realisiert sind. Damit kann eine gezielte Kühlung/Schmierung der Schneidplatten 6 im Bearbeitungsfall erfolgen.

Ein Abschnitt 34a des Kühlkanals 34 durchdringt den zweiten Schaftteil 3 vollständig. An der Stirnseite 27 des zweiten Schaftteils 3 ist der Durchgang 34 jedoch durch die Einstellschraube 23 verschlossen.

Die Einstellschraube 23 weist ihrerseits eine zentrale Bohrung 36 auf, mit Querverbindungen 37 zu einer Freimachung 38 am zweiten Schaftteil 3, von welcher vorzugsweise zu jeder Schneidplatte 22 schräge Stichleitungen 39 abgehen. Um dem Kühl-/Schmiermittel genügend Platz für die Verteilung in die Stichkanäle 39 zu verschaffen, ist z.B. die Einstellschraube 23 an dieser Stelle durch einen Einzug 40 verjüngt. Durch diese Maßnahme kann zielgenau Kühl-/Schmiermittel im Bearbeitungseinsatz zu jeder Schneidplatte 22 geführt werden.

### Bezugszeichenliste:

| | |
|---|---|
| 1 | Stufenreibahle |
| 2 | erstes Schaftteil |
| 3 | zweites Schaftteil |
| 4 | Hohlschaftkegel |
| 5 | Schneidkopf |
| 6 | Schneidplatte |
| 7 | Ausnehmung |
| 8 | Spannut |
| 9 | Durchgang |
| 10 | Konussitz |
| 11 | Außenkonus |
| 12 | Einstich |
| 13 | Innenkonus |
| 14 | zylindrischer Abschnitt |
| 15 | zylindrischer Abschnitt |
| 16 | Innengewinde |
| 17 | zylindrischer Abschnitt |
| 18 | Außengewinde |
| 19 | Zweikant |
| 20 | Zweikant |
| 21 | Schneidkopf |
| 22 | Schneidplatte |
| 23 | Einstellschraube |
| 24 | Außengewinde |
| 25 | Innengewinde |
| 26 | Bohrung |
| 27 | Stirnseite |
| 28 | Außenkonus |
| 29 | Innenkonus |
| 30 | Konussitz |
| 31 | Innensechskant |
| 32 | Übersatz |
| 33 | Abschnitt |
| 34 | Kühlkanal |
| 34a | Abschnitt |
| 35 | Querverbindung |
| 36 | Bohrung |
| 37 | Quervorrichtung |
| 38 | Freimachung |
| 39 | Stichleitungen |
| 40 | Einzug |

## Patentansprüche

1. Rotierbares Schaftwerkzeug, insbesondere Stufenreibahle (1), umfassend ein erstes Schaftteil (2), an dem ein erster Schneidkopf (5) mit wenigstens einer Schneide (6) ausgebildet ist, und ein zweites Schaftteil (3), an dem ein zweiter Schneidkopf (21) mit wenigstens einer Schneide (22) vorgesehen ist, wobei in einer Ausnehmung (9) im ersten Schaftteil (2) das zweite Schaftteil (3) in der Achse des ersten Schaftteils (2) eingesetzt werden kann, wobei der Durchmesser des ersten Schneidkopfs (5) einstellbar ist,
wobei das erste Schaftteil (2) einen zentralen Durchgang (9) aufweist, bei dem im Bereich des ersten Schneidkopfs (5) ein Konussitz (10) mit einem Innenkonus (13) und ein zylindrischer Abschnitt (15) mit einem Innengewinde (16) ausgebildet sind, und
wobei am zweiten Schaftteil (3) ein dem Innenkonus (13) entsprechender Außenkonus (11) und ein zylindrischer Abschnitt (17) mit einem Außengewinde (18) ausgebildet ist,
wobei das zweite Schaftteil (3) verdrehbar in das erste Schaffteil (2) einsetzbar ist,
wobei im eingesetzten Zustand des zweiten Schaftteils (3) der Außenkonus (11) bzw. das Außengewinde (18) des zweiten Schaftteils (3) mit dem Innenkonus (13) bzw. dem Innengewinde (16) des ersten Schaftteils ineinander greifen, und
wobei durch Anziehen der Verschraubung aus Innengewinde (16) und Außengewinde (18) der Außenkonus (11) in den Innenkonus (13) gezogen wird, so dass durch Verdrehung der Schaftteile (2, 3) zueinander ein fester Sitz des zweiten Schafteils in dem ersten Schaftteil (2) ausbildbar ist.

2. Schaftwerkzeug nach Anspruch 1, **dadurch gekennzeichnet, dass** je nach Verspannzustand des Konussitzes (10) durch ein Verdrehen des zweiten Schaftteils (3) gegenüber dem ersten Schaftteil (2) eine Einstellbarkeit eines Schneiddurchmessers des ersten Schneidkopfs (5) in einem vorgegebenen Einstellbereich gegeben ist.

3. Schaftwerkzeug nach Anspruch 1 oder 2, **dadurch gekennzeichnet, dass** das zweite Schaftteil (3) in das erste Schaftteil (2) einschraubbar ist.

4. Schaftwerkzeug nach einem der vorhergehenden Ansprüche, **dadurch gekennzeichnet, dass** am zweiten Schaftteil (3) Eingreifmittel (20) für ein erstes Betätigungswerkzeug vorgesehen sind.

5. Schaftwerkzeug nach einem der vorhergehenden Ansprüche, **dadurch gekennzeichnet, dass** am ersten Schaftteil (2) Eingreifmittel (19) für ein zweites Betätigungswerkzeug vorgesehen sind.

6. Schaftwerkzeug nach dem Oberbegriff des Anspruchs 1, insbesondere nach einem der vorhergehenden Ansprüche, **dadurch gekennzeichnet, dass** im zweiten Schaffteil (3) ein Kühlkanal (34) vorhanden ist, der einen Auslass im Bereich des zweiten Schneidkopfs (21) besitzt.

7. Schaftwerkzeug nach Anspruch 6, **dadurch gekennzeichnet, dass** der Kühlkanal (34) im zweiten Schaftteil (3) einen entlang des Schafts verlaufenden Kühlkanalabschnitt (34a) und einen von der Achse des zweiten Schaftteils (3) nach aussen verlaufenden Kühlkanalabschnitt (39) aufweist, der im Bereich einer Schneide (22) des zweiten Schneidkopfs (21) einen Auslass besitzt.

8. Schaftwerkzeug nach einem der vorhergehenden Ansprüche, **dadurch gekennzeichnet, dass** im zweiten Schaftteil (3) in der Stirnseite (27) des Schneidkopfes (21) ein Schraubenelement (23) vorgesehen ist, in welchem ein Kühlkanalabschnitt (36) ausgebildet ist, der mit einem Kühlkanalabschnitt (34a) in Verbindung steht, welcher im zweiten Schaftteil (3) läuft.

9. Schaftwerkzeug nach einem der vorhergehenden Ansprüche, **dadurch gekennzeichnet, dass** der Kühlkanalabschnitt (36) im Schraubenelement (23) den im zweiten Schaftteil (3) angeordneten Kühlkanalabschnitt (34a) mit dem von der Achse nach außen verlaufenden Kühlkanalabschnitt (39) verbindet.

10. Schaftwerkzeug nach einem der vorhergehenden Ansprüche, **dadurch gekennzeichnet, dass** in einem Wandungsabschnitt des zweiten Schaftteils (3) eine Freimachung (38) vorgesehen ist, von der der von der Achse nach außen verlaufende Kühlkanalabschnitt (39) ausgeht.

11. Schaftwerkzeug nach einem der vorhergehenden Ansprüche, **dadurch gekennzeichnet, dass** der Kühlkanalabschnitt (36) im Schraubenelement (23) in einem im zweiten Schaftteil (3) eingesetzten Montagezustand eine Verbindung zu der Freimachung (38) umfasst.

## Claims

1. Rotatable shank type tool, particularly step reamer (1), comprising a first shank part (2), on which a first cutting head (5) with at least one cutting edge (6) is formed, and a second shank part (3), to which a second cutting head (21) with at least one cutting edge (22) is provided, wherein in a recess (9) in the first shank part (2) the second shank part (3) can be inserted in the axis of the first shank part (2), wherein the diameter of the first cutting head (5) is adjustable,
wherein the first shank part (2) has a central orifice (9), in which in the area of the first cutting head (5) a conical seat (10) with an internal taper (13) and a cylindrical section (15) with an internal thread (16) are formed, and
wherein in the second shank part (3) an external taper (11) corresponding to the internal taper (13) and a cylindrical section (17) with an external thread (18) is formed, wherein the second shank part (3) is insertable in a rotatable manner into the first shank part (2),
wherein in the inserted state of the second shank part (3) the external taper (11) and accordingly the external thread (18) of the second shank part (3) engage with the internal taper (13) and accordingly the internal thread (16) of the first shank part, and
wherein by tightening the screw connection of internal thread (16) and external thread (18) the external taper (11) is pulled into the internal taper (13), so that by rotating the shank parts (2,3) relative to each other a strong fit of the second shank part in the first shank part (2) may be formed.

2. Shank type tool according to claim 1, **characterized in that** depending on the tightening state of the conical seat (10) by rotating the second shank part (3) relative to the first shank part (2) an adjustability of the cutting diameter of the first cutting head (5) in a predetermined adjustment range is given.

3. Shank type tool according to claim 1 or 2, **characterized in that** the second shank part (3) can be screwed into the first shank part(2).

4. Shank type tool according to any one of the preceding claims, **characterized in that** on the second shank part (3) engagement means (20) for a first actuating tool are provided.

5. Shank type tool according to any one of the preceding claims, **characterized in that** on the first shank part (2) engagement means (19) for a second actuating tool are provided.

6. Shank type tool according to the preamble of claim 1, in particular according to any one of the preceding claims, **characterized in that** in the second shank part (3) a cooling channel (34) is provided, which has an outlet in the region of the second cutting head (21).

7. Shank type tool according to claim 6, **characterized in that** the cooling channel (34) in the second shank part (3) has a cooling channel section extending along the shank (34a) and a cooling channel section extending outwards from the axis (39) of the second shank part (3) which has an outlet in the region of the cutting edge (22) of the second cutting head (21).

8. Shank type tool according to any one of the preceding claims, **characterized in that** in the second shank part (3) in the front side (27) of the cutting head (21) a screw unit (23) is provided, in which a cooling channel section (36) is formed, which is connected to a cooling channel section (34a) which runs in the second shank part (3).

9. Shank type tool according to any one of the preceding claims, **characterized in that** the cooling channel section (36) in the screw unit (23) connects the cooling channel section (34a) arranged in the second shank part (3) to the cooling channel extending outwards from the axis (39).

10. Shank type tool according to any one of the preceding claims, **characterized in that** in a wall section of the second shank part (3) a clearance (38) is provided, from which the cooling channel extending outwards from the axis (39) originates.

11. Shank type tool according to any one of the preceding claims, **characterized in that** the cooling channel section (36) in the screw unit (23), in an assembled state in the second shank part (3), comprises a connection to the clearing (38).

## Revendications

1. Outil à tige rotatif, en particulier alésoir étagé (1), comprenant une première partie de tige (2) sur laquelle est réalisée une première tête de coupe (5) avec au moins un tranchant (6), et une deuxième partie de tige (3) sur laquelle est prévue une deuxième tête de coupe (21) avec au moins un tranchant (22), la deuxième partie de tige (3) pouvant être logée dans l'axe de la première partie de tige (2) dans une cavité (9) de la première partie de tige (2), le diamètre de la première tête de coupe (5) étant réglable,
dans lequel la première partie de tige (2) présente un passage (9) central, un logement (10) de cône avec un cône intérieur (13) et un segment cylindrique (15) pourvu d'un filet intérieur (16) étant réalisés au niveau de la première tête de coupe (5), et
dans lequel sont réalisés, sur la deuxième partie de tige (3), un cône extérieur (11) correspondant au cône intérieur (13) et un segment cylindrique (17) pourvu d'un filet extérieur (18),
dans lequel la deuxième partie de tige (3) peut être logée de manière à pouvoir tourner dans la première partie de tige (2),
dans lequel, dans l'état de logement de la deuxième partie de tige (3), le cône extérieur (11) ou le filet extérieur (18) de la deuxième partie de tige (3) ont prise par emboîtement avec le cône intérieur (13) ou le filet intérieur (16) de la première partie de tige, et
dans lequel, par serrage de la connexion formée par le filet intérieur (16) et le filet extérieur (18), le cône extérieur (11) est tiré dans le cône intérieur (13), si bien qu'un logement fixe de la deuxième partie de tige dans la première partie de tige (2) peut être réalisé par rotation des parties de tige (2, 3) l'une par rapport à l'autre.

2. Outil à tige selon la revendication 1, **caractérisé en ce qu'**une possibilité de réglage d'un diamètre de coupe de la première tête de coupe (5) dans une plage de réglage définie est donnée en fonction de l'état de serrage du logement (10) de cône par rotation de la deuxième partie de tige (3) par rapport à la première partie de tige (2).

3. Outil à tige selon la revendication 1 ou la revendication 2, **caractérisé en ce que** la deuxième partie de tige (3) peut être vissée dans la première partie de tige (2).

4. Outil à tige selon l'une des revendications précédentes, **caractérisé en ce que** des moyens de prise (20) pour un premier outil de manoeuvre sont prévus sur la deuxième partie de tige (3).

5. Outil à tige selon l'une des revendications précédentes, **caractérisé en ce que** des moyens de prise (19) pour un deuxième outil de manoeuvre sont prévus sur la première partie de tige (2).

6. Outil à tige selon le préambule de la revendication 1, en particulier selon l'une des revendications précédentes, **caractérisé en ce qu'**un canal de refroidissement (34) est présent dans la deuxième partie de tige (3), lequel est pourvu d'une sortie au niveau de la deuxième tête de coupe (21).

7. Outil à tige selon la revendication 6, **caractérisé en ce que** le canal de refroidissement (34) comporte un segment de canal de refroidissement (34a) s'étendant le long de la tige dans la deuxième partie de tige (3), et un segment de canal de refroidissement (39) s'étendant vers l'extérieur depuis l'axe de la deuxième partie de tige (3), lequel est pourvu d'une sortie au niveau d'un tranchant (22) de la deuxième tête de coupe (21).

8. Outil à tige selon l'une des revendications précédentes, **caractérisé en ce qu'**un élément à vis (23) est prévu dans la deuxième partie de tige (3), sur la face frontale (27) de la tête de coupe (21), dans lequel est ménagé un segment de canal de refroidissement (36) relié à un segment de canal de refroidissement (34a) qui s'étend dans la deuxième partie de tige (3).

9. Outil à tige selon l'une des revendications précédentes, **caractérisé en ce que** le segment de canal de refroidissement (36) de l'élément à vis (23) relie le segment de canal de refroidissement (34a) ménagé dans la deuxième partie de tige (3) au segment de canal de refroidissement (39) s'étendant vers l'extérieur depuis l'axe.

10. Outil à tige selon l'une des revendications précédentes, **caractérisé en ce qu'**un évidement (38) est prévu dans une zone de paroi de la deuxième partie de tige (3), d'où part le segment de canal de refroidissement (39) s'étendant vers l'extérieur depuis l'axe.

11. Outil à tige selon l'une des revendications précédentes, **caractérisé en ce que** le segment de canal de refroidissement (36) de l'élément à vis (23) présente un raccord vers l'évidement (38) en état de montage dans la deuxième partie de tige (3).
